# EUROPÄISCHE PATENTSCHRIFT

(11) **EP 4 477 442 B1**
(45) Veröffentlichungstag und Bekanntmachung des Hinweises auf die Patenterteilung: **25.06.2025**
(21) Anmeldenummer: 24167589.1
(22) Anmeldetag: 28.03.2024
(51) Int. Cl.: B60K 15/03, B60K 15/073

(54) **TANKSYSTEM**
TANK SYSTEM
SYSTÈME DE RÉSERVOIR

(30) Priorität: 16.06.2023 DE 102023115761
(43) Veröffentlichungstag der Anmeldung: 18.12.2024
(73) Patentinhaber: Friedrich Boysen GmbH & Co. KG, 72213 Altensteig (DE)
(72) Erfinder: Bessey, Dirk, 71083 Herrenberg (DE); Faiß, Manuel Eugen, 72181 Starzach (DE); Rall, Christian Klaus, 72213 Altensteig (DE); Dengler, Lukas, 72285 Pfalzgrafenweiler (DE)
(74) Vertreter: Manitz Finsterwald Patent- und Rechtsanwaltspartnerschaft mbB

(56) Entgegenhaltungen:
- EP-A1- 3 056 794
- DE-A1- 102019 125 184
- DE-A1- 102021 120 355
- US-B2- 8 403 000

## Beschreibung

Die Erfindung betrifft ein Tanksystem mit einem Kryobehälter zum Speichern eines verflüssigten Gases, wobei der Kryobehälter eine wenigstens doppelwandige Hülle aufweist, die einen Speicherraum für das verflüssigte Gas umschließt, einer außerhalb des Speicherraums angeordneten Steuer-, Auswertungs- und/oder Energieversorgungseinheit und einer elektrischen Leitungsanordnung zum Übertragen von Signalen und/oder Versorgungsenergie zwischen dem Speicherraum und der Steuer-, Auswertungs- und/oder Energieversorgungseinheit.

Solche Tanksysteme werden beispielsweise dazu eingesetzt, Kraftstoffe wie Wasserstoff oder Erdgas auf Kraftfahrzeugen mitzuführen. Kryobehälter sind dafür ausgelegt, verflüssigte Gase für einen längeren Zeitraum auf einem besonders tiefen Temperaturniveau zu halten, so dass eine vergleichsweise große Gasmenge bei relativ geringem Druck gespeichert werden kann. Dies wird im Allgemeinen durch eine wärmeisolierende Ausführung der Hülle erzielt, insbesondere durch eine Doppelwandstruktur mit Vakuum. Prinzipiell kann die Hülle auch eine Dreifachwandstruktur oder eine andere Mehrfachwandstruktur aufweisen. Bei Bedarf kann auch eine aktive Kühlung des Kryobehälters erfolgen. Moderne Kryobehälter sind in der Lage, Flüssigwasserstoff für einen Zeitraum von mehreren Tagen bei einer Temperatur von -253°C oder weniger zu halten.

Mittels der elektrischen Leitungsanordnung können zum Beispiel die Signale eines im Speicherraum angeordneten Füllstandssensors kabelgebunden an eine elektronische Auswertungseinheit weitergeleitet werden. Für die Durchführung der Leitungsanordnung durch die wenigstens doppelwandige Hülle kann ein einschweißbares Durchführungsbauteil vorgesehen sein, das einen Isolationskörper mit beidseitig angeordneten Kontaktelementen hält. Es werden dann innen und außen jeweilige Leiter-Enden an die Kontaktelemente gelötet, geklemmt, gesteckt oder geschraubt. Dies ist mit einem beträchtlichen Montageaufwand verbunden. In der Praxis ist es außerdem schwierig, Durchführungsbauteile bereitzustellen, welche die bei der Kryospeicherung gestellten Anforderungen hinsichtlich Dichtheit, Druckbeständigkeit und Widerstandsfähigkeit erfüllen.

Es ist eine Aufgabe der Erfindung, bei einem Tanksystem der vorstehend genannten Art die Übertragung von Signalen und/oder Versorgungsenergie durch die Hülle des Kryobehälters einfacher und zuverlässiger zu gestalten.

Die Lösung erfolgt durch ein Tanksystem mit den Merkmalen des Anspruchs 1.

Erfindungsgemäß umfasst die elektrische Leitungsanordnung eine mineralisolierte Leitung, die wenigstens einen Innenleiter aus Metall, einen den wenigstens einen Innenleiter umhüllenden Isoliermantel aus einem mineralischen Material und einen den Isoliermantel umhüllenden Außenmantel aus Metall umfasst, wobei das Tanksystem ein Hülsenelement aus Metall umfasst, das mit der wenigstens doppelwandigen Hülle oder mit einem durch die wenigstens doppelwandige Hülle geführten Metallbauteil, insbesondere Rohrleitung, verschweißt ist und das einen Durchgangskanal aufweist, wobei die mineralisolierte Leitung durch den Durchgangskanal hindurchgeführt ist und der Außenmantel der mineralisolierten Leitung direkt oder indirekt mit dem Hülsenelement verschweißt ist.

Aufgrund der erfindungsgemäßen Gestaltung ist es nicht notwendig, ein Durchführungsbauteil mit Kontaktelementen bereitzustellen. Weiterhin entfallen bei der Montage aufwändige Kontaktierungsarbeiten, da die mineralisolierte Leitung an der Behälterwand nicht unterbrochen ist. Die mineralisolierte Leitung bildet bei einem erfindungsgemäßen Tanksystem in Verbindung mit dem Hülsenelement gewissermaßen selbst die Leitungsdurchführung. Gängige mineralisolierte Leitungen oder mineralisolierte Kabel weisen eine beträchtliche Stabilität und Korrosionsfestigkeit auf, so dass sie sogar in besonders materialbelastenden Bereichen wie Flüssigwasserstofftanks eine zuverlässige Signalübertragung ermöglichen.

Das innenseitige Ende der mineralisolierten Leitung kann mit einer Sensoreinrichtung wie zum Beispiel einem Füllstandssensor elektrisch verbunden sein. Die Steuer-, Auswertungs- und/oder Energieversorgungseinheit umfasst vorzugsweise eine elektronische Schaltung.

Eine Ausführungsform der Erfindung sieht vor, dass eine Verstärkungshülse aus Metall auf den Außenmantel der mineralisolierten Leitung aufgeschweißt ist, wobei die Verstärkungshülse in dem Durchgangskanal aufgenommen und mit dem Hülsenelement verschweißt ist. Die Verstärkungshülse sorgt für eine ausreichende Stabilität der Leitung im Bereich des Durchgangskanals. Zudem ist die Montage dadurch erleichtert, dass das Hülsenelement vor dem Verschweißen gegenüber der Verstärkungshülse verschiebbar ist.

Vorzugsweise weist die Verstärkungshülse bezogen auf die Leitungsrichtung eine größere Länge auf als der Durchgangskanal. Dies ermöglicht eine Aufnahme der Verstärkungshülse über die gesamte Länge des Durchgangskanals in verschiedenen Positionen. Somit können bei der Montage Toleranzen kompensiert werden.

Eine weitere Ausführungsform der Erfindung sieht vor, dass eine Rohrleitung aus Metall durch die wenigstens doppelwandige Hülle geführt ist, die mineralisolierte Leitung zumindest abschnittsweise innerhalb der Rohrleitung verläuft und das Hülsenelement in eine Öffnung der Rohrleitung eingeschweißt ist. Dies ermöglicht eine besonders robuste Konstruktion. Bei der Rohrleitung kann es sich um eine Sicherheitsleitung handeln, die zu einem Überdruckventil führt. Eine solche Sicherheitsleitung ist bei Flüssiggastanks im Allgemeinen ohnehin vorzusehen. Die Rohrleitung kann in vorteilhafter Weise zusätzlich für die Unterbringung der mineralisolierten Leitung genutzt werden.

Das Hülsenelement kann in ein offenes Ende der Rohrleitung eingeschweißt sein. Es muss dann keine separate Aussparung zum Einsetzen des Hülsenelements in der Rohrleitung vorgesehen sein. Das Hülsenelement kann einen Flansch oder eine Anschweißlippe aufweisen, der oder die an den Durchmesser der Rohrleitung angepasst ist.

Der maximale Durchmesser der mineralisolierten Leitung kann höchstens 40% und vorzugsweise höchstens 20% des minimalen Durchmessers der Rohrleitung betragen. Dadurch ist sichergestellt, dass die Funktion der Rohrleitung, also beispielsweise der Sicherheitsleitung, durch die hindurchgeführte elektrische Leitung nicht nennenswert beeinträchtigt ist.

Die mineralbasierte Leitung kann sich durchgehend von einer im Speicherraum angeordneten Sensoreinrichtung bis zu der Steuer-, Auswertungs- und/oder Energieversorgungseinheit erstrecken. Bei dieser Ausgestaltung entfallen aufwändige Kontaktierungen an Übergangs- oder Schnittstellen.

Der Isoliermantel kann aus einem keramischen Werkstoff gefertigt sein. Keramische Isolator-Materialien weisen eine besonders hohe chemische, thermische und mechanische Stabilität auf. Vorzugsweise umfasst der keramische Werkstoff ein Metalloxid wie zum Beispiel Magnesiumoxid.

Gemäß einer weiteren Ausführungsform der Erfindung sind der wenigstens eine Innenleiter, der Außenmantel und/oder das Hülsenelement aus Edelstahl gefertigt. Elektrische Leiter aus Edelstahl sind auch in besonders korrosiven Umgebungen zuverlässig verwendbar. Vorzugsweise sind der wenigstens eine Innenleiter, der Außenmantel und/oder das Hülsenelement aus einem austenitischen Edelstahl, insbesondere einem Chrom-Nickel-Stahl, gefertigt, um eine ausreichende Beständigkeit in einer Wasserstoffumgebung sicherzustellen. Das Kontaktieren von elektrischen Leitern aus Edelstahl kann durch Schweißen erfolgen.

Gemäß einer speziellen Ausgestaltung der Erfindung sind der Kryobehälter und die Steuer-, Auswertungs- und/oder Energieversorgungseinheit zur Befestigung am Tragrahmen eines Kraftfahrzeugs ausgebildet. Bei ortsbeweglichen Tanksystemen für Fahrzeuge hat sich eine erfindungsgemäße Gestaltung der Leitungsanordnung als besonders günstig erwiesen.

Die Erfindung betrifft auch ein Verfahren zum Herstellen eines Tanksystems, insbesondere eines wie vorstehend beschriebenen Tanksystems, mit den Schritten:
- Bereitstellen eines Kryobehälters, der eine wenigstens doppelwandige Hülle aufweist, die einen Speicherraum für ein verflüssigtes Gas umschließt,
- Anordnen einer Steuer-, Auswertungs- und/oder Energieversorgungseinheit außerhalb des Speicherraums,
- Führen einer mineralisolierten Leitung, die wenigstens einen Innenleiter aus Metall, einen den wenigstens einen Innenleiter umhüllenden Isoliermantel aus einem mineralischen Material und einen den Isoliermantel umhüllenden Außenmantel aus Metall umfasst, vom Speicherraum durch die wenigstens doppelwandige Hülle, vorzugsweise bis zu der Steuer-, Auswertungs- und/oder Energieversorgungseinheit,
- Aufschieben eines Hülsenelements aus Metall von außen auf die mineralisolierte Leitung,
- Verschweißen des aufgeschobenen Hülsenelements mit der wenigstens doppelwandigen Hülle oder mit einem durch die wenigstens doppelwandige Hülle geführten Metallbauteil, insbesondere Rohrleitung, und
- Verschweißen des Außenmantels der mineralisolierten Leitung, direkt oder über eine Verstärkungshülse, mit dem Hülsenelement.

Bei einem erfindungsgemäßen Verfahren muss kein kontaktierbares Durchführungsbauteil bereitgestellt werden, weil die mineralisolierte Leitung über das Hülsenelement unterbrechungsfrei durch die Hülle geführt wird. Aufwändige Kontaktierungsschritte beim Durchgang durch die Hülle entfallen ebenfalls.

Es kann vorgesehen sein, dass die mineralisolierte Leitung vom Speicherraum aus durch eine Rohrleitung aus Metall gezogen wird, die durch die wenigstens doppelwandige Hülle geführt ist, und wobei der Außenmantel erst mit dem Hülsenelement verschweißt wird, nachdem die mineralisolierte Leitung eine vorbestimmte Endposition erreicht hat. Es ist bei dieser Vorgehensweise nicht erforderlich, die mineralbasierte Leitung nach dem Einziehen in die Rohrleitung zu verschieben. Ein solches Verschieben ist wegen der relativ hohen Eigensteifigkeit von mineralisolierten Leitungen im Allgemeinen schwierig.

Weiterbildungen der Erfindung sind auch den abhängigen Ansprüchen, der Beschreibung sowie den beigefügten Zeichnungen zu entnehmen.

Die Erfindung wird nachfolgend beispielhaft unter Bezugnahme auf die Zeichnungen beschrieben.
- Fig. 1: ist eine schematische Darstellung eines erfindungsgemäßen Tanksystems.
- Fig. 2: zeigt eine mineralisolierte Leitung des Tanksystems gemäß Fig. 1 in einer Querschnittsansicht.
- Fig. 3: ist eine Schnittdarstellung des Endbereichs einer Rohrleitung des Tanksystems gemäß Fig. 1.

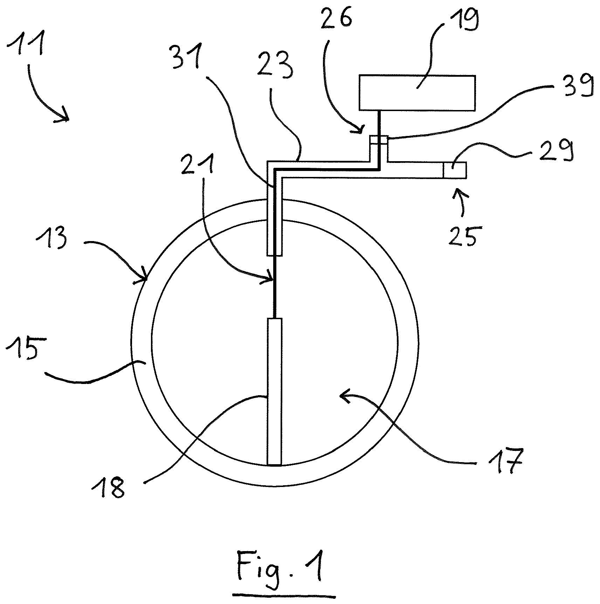

Das in Fig. 1 in vereinfachter Form gezeigte Tanksystem 11 ist als Kraftstofftanksystem für ein Nutzfahrzeug ausgelegt und umfasst einen Kryobehälter 13 zum Speichern von Flüssigwasserstoff. Um eine ausreichende Wärmeisolierung bereitzustellen, weist der Kryobehälter 13 eine doppelwandige evakuierte Hülle 15 auf, vorzugsweise aus Edelstahl, die einen Speicherraum 17 für den verflüssigten Wasserstoff umschließt.

Weiterhin umfasst das Tanksystem 11 einen im Speicherraum 17 angeordneten Füllstandssensor 18 sowie eine elektronische Auswertungseinheit 19, die sich außerhalb des Speicherraums 17 befindet. Eine elektrische Leitungsanordnung 21 dient dazu, Signale des Füllstandssensors 18 kabelgebunden an die elektronische Auswertungseinheit 19 zu übermitteln. Wie gezeigt ist die elektrische Leitungsanordnung 21 abschnittsweise in einer Rohrleitung 23 aus Metall verlegt, welche durch die doppelwandige Hülle 15 geführt ist. Wie dargestellt weist die Rohrleitung 23 zwei außerhalb des Speicherraums befindliche Rohr-Enden 25, 26 auf. An einem ersten Rohr-Ende 25 ist ein Sicherheitsventil 29 vorgesehen, das für ein Ablassen von Gas aus dem Kryobehälter 13 bei Überschreiten eines Schwellendrucks sorgt. Durch das zweite Rohr-Ende 26 ist die elektrische Leitungsanordnung 21 nach außen geführt.

Die elektrische Leitungsanordnung 21 umfasst eine mineralisolierte Leitung 31, die sich bei dem dargestellten Ausführungsbeispiel zumindest im Wesentlichen kontinuierlich von dem Füllstandssensor 18 bis zu der elektronischen Auswertungseinheit 19 erstreckt.

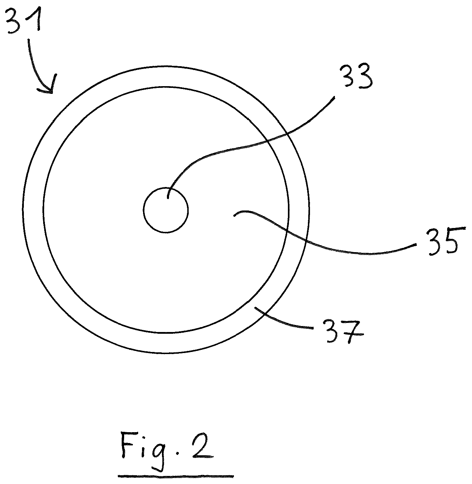

Wie in Fig. 2 erkennbar ist, umfasst die mineralisolierte Leitung 31 einen Innenleiter 33, einen den Innenleiter 33 umhüllenden Isoliermantel 35 und einen den Isoliermantel 35 umhüllenden Außenmantel 37. Grundsätzlich könnten auch mehr als ein Innenleiter 33 in den Isoliermantel 35 eingebettet sein. Während der Innenleiter 33 und der Außenmantel 37 aus Metall, vorzugsweise aus einem wasserstofftauglichen Edelstahl, gefertigt sind, ist der Isoliermantel 35 aus einem mineralbasierten Isoliermaterial gefertigt, beispielsweise aus einem keramischen Material. Eine isolierende Außenhülle ist nicht vorgesehen.

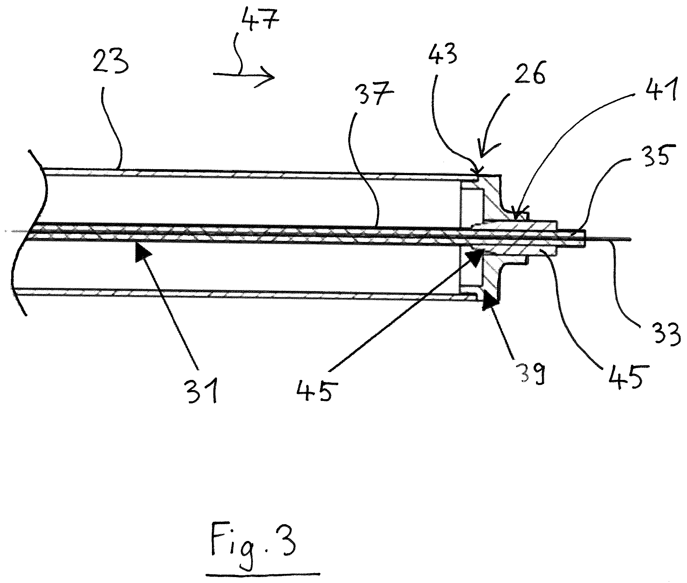

Die Durchführung der mineralisolierten Leitung 31 durch das zweite Rohr-Ende 26 ist in Fig. 3 genauer gezeigt. Ein Hülsenelement 39 aus Metall, vorzugsweise aus einem wasserstofftauglichen Edelstahl, ist in das zweite Rohr-Ende 26 der Rohrleitung 23 eingesetzt und mit der Wand der Rohrleitung 23 dichtend verschweißt. Das Hülsenelement 39 weist einen zentralen Durchgangskanal 41 sowie einen umlaufenden Ansatz 43 auf. Die Schweißnaht verläuft entlang des Ansatzes 43.

Auf den Außenmantel 37 der mineralisolierten Leitung 31 ist eine Verstärkungshülse 45 aus Metall, vorzugsweise aus einem wasserstofftauglichen Edelstahl, aufgeschweißt. Die aufgeschweißte Verstärkungshülse 45 ist in dem Durchgangskanal 41 des Hülsenelements 39 luftspaltfrei aufgenommen und mit dem Hülsenelement 39 dichtend verschweißt. Somit ist die mineralisolierte Leitung 31 durch den Durchgangskanal 41 hindurchgeführt und über die Verstärkungshülse 45 mit dem Hülsenelement 39 verschweißt. Dementsprechend ist das zweite Rohr-Ende 26 druckfest abgedichtet.

Die Verbindung des Innenleiters 33 und des Außenmantels 37 mit den jeweiligen zugeordneten, in Fig. 1 nicht einzeln gezeigten Kontakten des Füllstandssensors 18 und der Auswertungseinheit 19 erfolgt vorzugsweise durch Schweißen.

Da am Übergang von der Druckseite des Kryobehälters 13 zum Außenraum kein Löten, Klemmen, Stecken oder Schrauben erforderlich ist, ist die elektrische Leitungsanordnung 21 einfach und kostengünstig zu implementieren. Es versteht sich, dass die offenbarte Art der Durchführung der elektrischen Leitungsanordnung 21 durch die Hülle 15 auch für andere Anwendungen geeignet ist. Beispielsweise könnte anstelle der Auswertungseinheit 19 eine Steuereinheit vorgesehen sein, die Steuersignale für ein Empfangsgerät in den Speicherraum 17 überträgt. Ebenso ist eine Übertragung von elektrischer Energie vom Speicherraum 17 und/oder in den Speicherraum 17 möglich. Ferner kann anstatt der Auswertungseinheit 19 eine komplexe elektronische Einrichtung vorgesehen sein, die sowohl Steuer- als auch Auswertungsaufgaben sowie gegebenenfalls eine Stromversorgung wahrnimmt.

Das Tanksystem 11 kann modulartig ausgeführt sein, so dass es bei unterschiedlichen Nutzfahrzeugen als Kraftstofftank eingesetzt werden kann.

Bei der Herstellung des Tanksystems 11 wird zunächst der Kryobehälter 13 einschließlich des montierten Füllstandssensors 18 sowie der durch die Hülle 15 geführten Rohrleitung 23 bereitgestellt. Die Auswertungseinheit 19 wird außerhalb des Speicherraums 17, beispielsweise neben dem Kryobehälter 13, angeordnet und gegebenenfalls auf einem Trägergestell des Tanksystems 11 befestigt. Die Verstärkungshülse 45 wird an einer vorgegebenen Position auf den Außenmantel 37 der mineralisolierten Leitung 31 aufgeschweißt.

Die mineralisolierte Leitung 31 wird dann vom Speicherraum 17 aus durch die Rohrleitung 23 geführt und durch das zweite Rohr-Ende 26 wieder aus dieser hinausgeführt. Die mineralisolierte Leitung 31 weist bevorzugt eine ausreichend hohe Flexibilität auf, um ein Durchführen durch Windungen (nicht dargestellt) der Rohrleitung 23 zu gestatten. Sobald die mineralisolierte Leitung 31 ihre vorgegebene Position erreicht hat, wird das Hülsenelement 39 von außen auf die mineralisolierte Leitung 31 aufgeschoben, bis die Verstärkungshülse 45 in den Durchgangskanal 41 gelangt ist und der Ansatz 43 am zweiten Rohr-Ende 26 anstößt. Das Ausgleichen von Längentoleranzen ohne nachträgliche Verschiebung der mineralisolierten Leitung 31 in der Rohrleitung 23 ist hierbei dadurch erleichtert, dass die Verstärkungshülse 45 bezogen auf die Leitungsrichtung 47 eine größere Länge aufweist als der Durchgangskanal 41.

Das Hülsenelement 39 wird schließlich einerseits mit der Verstärkungshülse 45 und andererseits mit der Rohrleitung 23 gasdicht und druckfest verschweißt.

Die Erfindung ermöglicht eine vereinfachte Durchführung einer elektrischen Leitungsanordnung 21 durch die Hülle 15 eines Kryobehälters 13, welche trotz der einfachen und kostengünstigen Ausführung ein hohes Maß an Robustheit aufweist.

### Bezugszeichenliste:

- 11: Tanksystem
- 13: Kryobehälter
- 15: Hülle
- 17: Speicherraum
- 18: Füllstandssensor
- 19: Auswertungseinheit
- 21: elektrische Leitungsanordnung
- 23: Rohrleitung
- 25: Rohr-Ende
- 26: Rohr-Ende
- 29: Sicherheitsventil
- 31: mineralisolierte Leitung
- 33: Innenleiter
- 35: Isoliermantel
- 37: Außenmantel
- 39: Hülsenelement
- 41: Durchgangskanal
- 43: Ansatz
- 45: Verstärkungshülse
- 47: Leitungsrichtung

## Patentansprüche

1. Tanksystem (11) mit
einem Kryobehälter (13) zum Speichern eines verflüssigten Gases, wobei der Kryobehälter (13) eine wenigstens doppelwandige Hülle (15) aufweist, die einen Speicherraum (17) für das verflüssigte Gas umschließt,
einer außerhalb des Speicherraums (17) angeordneten Steuer-, Auswertungs- und/oder Energieversorgungseinheit (19) und
einer elektrischen Leitungsanordnung (21) zum Übertragen von Signalen und/oder Versorgungsenergie zwischen dem Speicherraum (17) und der Steuer-, Auswertungs- und/oder Energieversorgungseinheit (19), **dadurch gekennzeichnet, dass**
die elektrische Leitungsanordnung (21) eine mineralisolierte Leitung (31) umfasst, die wenigstens einen Innenleiter (33) aus Metall, einen den wenigstens einen Innenleiter (33) umhüllenden Isoliermantel (35) aus einem mineralischen Material und einen den Isoliermantel (35) umhüllenden Außenmantel (37) aus Metall umfasst, und
das Tanksystem (11) ein Hülsenelement (39) aus Metall umfasst, das mit der wenigstens doppelwandigen Hülle (15) oder mit einem durch die wenigstens doppelwandige Hülle (15) geführten Metallbauteil, insbesondere Rohrleitung (23), verschweißt ist und das einen Durchgangskanal (41) aufweist,
die mineralisolierte Leitung (31) durch den Durchgangskanal (41) hindurchgeführt ist und der Außenmantel (37) der mineralisolierten Leitung (31) direkt oder indirekt mit dem Hülsenelement (39) verschweißt ist.

2. Tanksystem nach Anspruch 1,
wobei eine Verstärkungshülse (45) aus Metall auf den Außenmantel (37) der mineralisolierten Leitung (31) aufgeschweißt ist und wobei die Verstärkungshülse (45) in dem Durchgangskanal (41) aufgenommen und mit dem Hülsenelement (39) verschweißt ist.

3. Tanksystem nach Anspruch 2,
wobei die Verstärkungshülse (45) bezogen auf die Leitungsrichtung (47) eine größere Länge aufweist als der Durchgangskanal (41).

4. Tanksystem nach einem der vorstehenden Ansprüche,
wobei eine Rohrleitung (23) aus Metall durch die wenigstens doppelwandige Hülle (15) geführt ist, die mineralisolierte Leitung (31) zumindest abschnittsweise innerhalb der Rohrleitung (23) verläuft und das Hülsenelement (39) in eine Öffnung der Rohrleitung (23) eingeschweißt ist.

5. Tanksystem nach Anspruch 4,
wobei das Hülsenelement (39) in ein offenes Ende (26) der Rohrleitung (23) eingeschweißt ist.

6. Tanksystem nach Anspruch 4 oder 5,
wobei der maximale Durchmesser der mineralisolierten Leitung (31) höchstens 40% und vorzugsweise höchstens 20% des minimalen Durchmessers der Rohrleitung (23) beträgt.

7. Tanksystem nach einem der vorstehenden Ansprüche,
wobei sich die mineralbasierte Leitung (31) durchgehend von einer im Speicherraum (17) angeordneten Sensoreinrichtung (18) bis zu der Steuer-, Auswertungs- und/oder Energieversorgungseinheit (19) erstreckt.

8. Tanksystem nach einem der vorstehenden Ansprüche,
wobei der Isoliermantel (35) aus einem keramischen Werkstoff gefertigt ist.

9. Tanksystem nach einem der vorstehenden Ansprüche,
wobei der wenigstens eine Innenleiter (33), der Außenmantel (37) und/oder das Hülsenelement (39) aus Edelstahl gefertigt sind.

10. Tanksystem nach einem der vorstehenden Ansprüche,
wobei der Kryobehälter (13) und die Steuer-, Auswertungs- und/oder Energieversorgungseinheit (19) zur Befestigung am Tragrahmen eines Kraftfahrzeugs ausgebildet sind.

11. Verfahren zum Herstellen eines Tanksystems (11), insbesondere eines Tanksystems nach einem der vorstehenden Ansprüche, mit den Schritten:
- Bereitstellen eines Kryobehälters (13), der eine wenigstens doppelwandige Hülle (15) aufweist, die einen Speicherraum (17) für ein verflüssigtes Gas umschließt,
- Anordnen einer Steuer-, Auswertungs- und/oder Energieversorgungseinheit (19) außerhalb des Speicherraums (17),
- Führen einer mineralisolierten Leitung (31), die wenigstens einen Innenleiter (33) aus Metall, einen den wenigstens einen Innenleiter (33) umhüllenden Isoliermantel (35) aus einem mineralischen Material und einen den Isoliermantel (35) umhüllenden Außenmantel (37) aus Metall umfasst, vom Speicherraum (17) durch die wenigstens doppelwandige Hülle (15), vorzugsweise bis zu der Steuer-, Auswertungs- und/oder Energieversorgungseinheit (19),
- Aufschieben eines Hülsenelements (39) aus Metall von außen auf die mineralisolierte Leitung (31),
- Verschweißen des aufgeschobenen Hülsenelements (39) mit der wenigstens doppelwandigen Hülle (15) oder mit einem durch die wenigstens doppelwandige Hülle (15) geführten Metallbauteil, insbesondere Rohrleitung (23), und
- Verschweißen des Außenmantels (37) der mineralisolierten Leitung (31), direkt oder über eine Verstärkungshülse (45), mit dem Hülsenelement (39).

12. Verfahren nach Anspruch 11,
wobei die mineralisolierte Leitung (31) vom Speicherraum (17) aus durch eine Rohrleitung (23) aus Metall gezogen wird, die durch die wenigstens doppelwandige Hülle (15) geführt ist, und wobei der Außenmantel (37) erst mit dem Hülsenelement (39) verschweißt wird, nachdem die mineralisolierte Leitung (31) eine vorbestimmte Endposition erreicht hat.

## Claims

1. A tank system (11) comprising
a cryogenic container (13) for storing a liquefied gas,
wherein the cryogenic container (13) has an at least double-walled shell (15) which encloses a storage space (17) for the liquefied gas,
a control, evaluation and/or energy supply unit (19) arranged outside the storage space (17), and
an electrical line arrangement (21) for transmitting signals and/or supply energy between the storage space (17) and the control, evaluation and/or energy supply unit (19),
**characterized in that**
the electrical line arrangement (21) comprises a mineral-insulated line (31) which comprises at least one inner conductor (33) composed of metal, an insulating jacket (35) composed of a mineral material that envelops the at least one inner conductor (33), and an outer jacket (37) composed of metal that envelops the insulating jacket (35), and
the tank system (11) comprises a sleeve element (39) composed of metal that is welded to the at least double-walled shell (15) or to a metal component, in particular a pipeline (23), which is guided through the at least double-walled shell (15) and which has a through passage (41),
the mineral-insulated line (31) is guided through the through passage (41) and the outer jacket (37) of the mineral-insulated line (31) is welded directly or indirectly to the sleeve element (39).

2. A tank system according to claim 1,
wherein a reinforcing sleeve (45) composed of metal is welded onto the outer jacket (37) of the mineral-insulated line (31) and wherein the reinforcing sleeve (45) is received in the through passage (41) and is welded to the sleeve element (39).

3. A tank system according to claim 2,
wherein the reinforcing sleeve (45) has a greater length in relation to the line direction (47) than the through passage (41).

4. A tank system according to any one of the preceding claims,
wherein a pipeline (23) composed of metal is guided through the at least double-walled shell (15), the mineral-insulated line (31) at least sectionally extends within the pipeline (23) and the sleeve element (39) is welded into an opening of the pipeline (23).

5. A tank system according to claim 4,
wherein the sleeve element (39) is welded into an open end (26) of the pipeline (23).

6. A tank system according to claim 4 or 5,
wherein the maximum diameter of the mineral-insulated line (31) amounts to at most 40% and preferably at most 20% of the minimum diameter of the pipeline (23).

7. A tank system according to any one of the preceding claims,
wherein the mineral-based line (31) extends continuously from a sensor device (18) arranged in the storage space (17) up to the control, evaluation and/or energy supply unit (19).

8. A tank system according to any one of the preceding claims,
wherein the insulating jacket (35) is made of a ceramic material.

9. A tank system according to any one of the preceding claims,
wherein the at least one inner conductor (33), the outer jacket (37) and/or the sleeve element (39) is/are made of stainless steel.

10. A tank system according to any one of the preceding claims,
wherein the cryogenic container (13) and the control, evaluation and/or energy supply unit (19) are configured for fastening to the support frame of a motor vehicle.

11. A method of manufacturing a tank system (11), in particular a tank system according to any one of the preceding claims, comprising the steps:
- providing a cryogenic container (13) which has an at least double-walled shell (15) which encloses a storage space (17) for a liquefied gas,
- arranging a control, evaluation and/or energy supply unit (19) outside the storage space (17),
- guiding a mineral-insulated line (31), which comprises at least one inner conductor (33) composed of metal, an insulating jacket (35) composed of a mineral material that envelops the at least one inner conductor (33) and an outer jacket (37) composed of metal that envelops the insulating jacket (35), from the storage space (17) through the at least double-walled shell (15), preferably up to the control, evaluation and/or energy supply unit (19),
- pushing a sleeve element (39) composed of metal onto the mineral-insulated line (31) from the outside,
- welding the pushed-on sleeve element (39) to the at least double-walled shell (15) or to a metal component, in particular a pipeline (23), guided through the at least double-walled shell (15), and
- welding the outer jacket (37) of the mineral-insulated line (31), directly or via a reinforcing sleeve (45), to the sleeve element (39).

12. A method according to claim 11,
wherein the mineral-insulated line (31) is drawn from the storage space (17) through a pipeline (23) composed of metal that is guided through the at least double-walled shell (15), and wherein the outer jacket (37) is only welded to the sleeve element (39) after the mineral-insulated line (31) has reached a predetermined end position.

## Revendications

1. Système de réservoir (11), comprenant
un récipient cryogénique (13) pour stocker un gaz liquéfié, le récipient cryogénique (13) présentant une enveloppe au moins à double paroi (15) qui entoure un espace de stockage (17) pour le gaz liquéfié,
une unité de commande, d'évaluation et/ou d'alimentation en énergie (19) disposée à l'extérieur de l'espace de stockage (17), et
un ensemble de ligne électrique (21) pour transmettre des signaux et/ou de l'énergie d'alimentation entre l'espace de stockage (17) et l'unité de commande, d'évaluation et/ou d'alimentation en énergie (19),
**caractérisé en ce que**
l'ensemble de ligne électrique (21) comprend une ligne à isolation minérale (31) qui comprend au moins un conducteur intérieur (33) en métal, une gaine isolante (35) en matériau minéral enveloppant ledit au moins un conducteur intérieur (33), et une gaine extérieure (37) en métal enveloppant ladite gaine isolante (35), et
le système de réservoir (11) comprend un élément de manchon (39) en métal qui est relié par soudage à ladite enveloppe au moins à double paroi (15) ou à un composant métallique, en particulier à un conduit tubulaire (23), mené à travers ladite enveloppe au moins à double paroi (15), et qui présente un canal de passage (41),
la ligne à isolation minérale (31) est menée à travers le canal de passage (41) et la gaine extérieure (37) de la ligne à isolation minérale (31) est soudée directement ou indirectement à l'élément de manchon (39).

2. Système de réservoir selon la revendication 1,
dans lequel un manchon de renforcement (45) en métal est soudé sur la gaine extérieure (37) de la ligne à isolation minérale (31), et le manchon de renforcement (45) est logé dans le canal de passage (41) et est soudé à l'élément de manchon (39).

3. Système de réservoir selon la revendication 2,
dans lequel le manchon de renforcement (45) présente, par rapport à la direction de la ligne (47), une longueur supérieure à celle du canal de passage (41).

4. Système de réservoir selon l'une des revendications précédentes,
dans lequel un conduit tubulaire (23) en métal est mené à travers l'enveloppe au moins à double paroi (15), la ligne à isolation minérale (31) s'étend au moins localement à l'intérieur du conduit tubulaire (23), et l'élément de manchon (39) est soudé dans une ouverture du conduit tubulaire (23).

5. Système de réservoir selon la revendication 4,
dans lequel l'élément de manchon (39) est soudé dans une extrémité ouverte (26) du conduit tubulaire (23).

6. Système de réservoir selon la revendication 4 ou 5,
dans lequel le diamètre maximal de la ligne à isolation minérale (31) est au plus égal à 40 % et de préférence au plus égal à 20 % du diamètre minimal du conduit tubulaire (23).

7. Système de réservoir selon l'une des revendications précédentes,
dans lequel la ligne à base minérale (31) s'étend en continu depuis un dispositif de détection (18), disposé dans l'espace de stockage (17), jusqu'à l'unité de commande, d'évaluation et/ou d'alimentation en énergie (19).

8. Système de réservoir selon l'une des revendications précédentes,
dans lequel la gaine isolante (35) est fabriquée en un matériau céramique.

9. Système de réservoir selon l'une des revendications précédentes,
dans lequel ledit au moins un conducteur intérieur (33), la gaine extérieure (37) et/ou l'élément de manchon (39) sont fabriqués en acier inoxydable.

10. Système de réservoir selon l'une des revendications précédentes,
dans lequel le récipient cryogénique (13) et l'unité de commande, d'évaluation et/ou d'alimentation en énergie (19) sont conçus pour être fixés au cadre porteur d'un véhicule automobile.

11. Procédé de fabrication d'un système de réservoir (11), en particulier d'un système de réservoir selon l'une des revendications précédentes, comprenant les étapes consistant à :
- fournir un récipient cryogénique (13) présentant une enveloppe au moins à double paroi (15) qui entoure un espace de stockage (17) pour un gaz liquéfié,
- disposer une unité de commande, d'évaluation et/ou d'alimentation en énergie (19) à l'extérieur de l'espace de stockage (17),
- mener une ligne à isolation minérale (31), comprenant au moins un conducteur intérieur (33) en métal, une gaine isolante (35) en matériau minéral enveloppant ledit au moins un conducteur intérieur (33) et une gaine extérieure (37) en métal enveloppant la gaine isolante (35), depuis l'espace de stockage (17) à travers l'enveloppe au moins à double paroi (15), de préférence jusqu'à l'unité de commande, d'évaluation et/ou d'alimentation en énergie (19),
- enfiler un élément de manchon (39) en métal sur la ligne à isolation minérale (31) depuis l'extérieur,
- souder l'élément de manchon (39) enfilé avec l'enveloppe au moins à double paroi (15) ou avec un élément métallique, en particulier un conduit tubulaire (23), mené à travers l'enveloppe au moins à double paroi (15), et
- souder la gaine extérieure (37) de la ligne à isolation minérale (31) à l'élément de manchon (39), directement ou par l'intermédiaire d'un manchon de renforcement (45).

12. Procédé selon la revendication 11,
dans lequel la ligne à isolation minérale (31) est tirée depuis l'espace de stockage (17) à travers un conduit tubulaire (23) en métal qui est mené à travers l'enveloppe au moins à double paroi (15), et la gaine extérieure (37) n'est soudée à l'élément de manchon (39) qu'après que la ligne à isolation minérale (31) a atteint une position finale prédéterminée.
